# EUROPEAN PATENT SPECIFICATION

(11) **EP 2 657 594 B1**
(45) Date of publication and mention of the grant of the patent: **13.03.2019**
(21) Application number: 13165436.0
(22) Date of filing: 25.04.2013
(51) Int. Cl.: F21V 8/00

(54) **Method and apparatus for preventing light leakage from light guide plate and display device having light guide plate painted with reflective material**
Verfahren und Vorrichtung zur Verhinderung von Lichtverlusten aus Lichtleiterplatten und Anzeigevorrichtung mit einer mit reflektierendem Material lackierten Lichtleiterplatte
Procédé et appareil pour empêcher les fuites de lumière d'une plaque de guidage de lumière et dispositif d'affichage comprenant une plaque de guidage de lumière peinte avec un matériau réfléchissant

(30) Priority: 25.04.2012 KR 20120043220
(43) Date of publication of application: 30.10.2013
(73) Proprietor: LG CNS Co., Ltd., Seoul 100-052 (KR)
(72) Inventor: Kwon, Jong Hyun, Seoul 137-060 (KR); Yoon, Tae Woong, Gyeonggi-do 423-710 (KR); Yang, Sung Sik, Gyeonggi-do 411-757 (KR)
(74) Representative: V.O.

(56) References cited:
- EP-A2- 1 239 320
- JP-A- H11 353 922
- US-A1- 2005 041 413
- US-A1- 2005 084 993
- US-A1- 2007 248 307

## Description

### CROSS-REFERENCE TO RELATED APPLICATION

This application claims the priority benefit of Korean Patent Application No. 10-2012-0043220, filed on April 25, 2012, in the Korean Intellectual Property Office.

### BACKGROUND

### 1. Field of the Invention

Exemplary embodiments relate to a method and apparatus for preventing a light leakage from a light guide plate and a display device having a light guide plate painted with a reflective material. The invention is defined by the appended claims.

### 2. Description of the Related Art

A light guide plate (LGP) used in an liquid crystal display (LCD) may guide light to a liquid crystal, and for the purpose of uniform luminance and illumination of a back light unit (BLU), the light guide plate may have a reflective tape attached to a side surface the light guide plate to prevent light emitted from a cold cathode fluorescent lamp (CCFL) or a light emitting diode (LED) from leaking from a side surface of the light guide plate.

In this instance, the reflective tape may be adhered to the side surface of the light guide plate manually by an operator. However, a manual attachment operation may have disadvantages of prolonged operation time, reduced productivity and precision, and increased production costs. As an alternative, a series of automated devices may be used to attach a reflective tape automatically, but may provide low operational performance.

### SUMMARY

An aspect of the present invention provides painting a side surface of a light guide plate with a liquid-state reflective material automatically.

Another aspect of the present invention also provides painting a side surface of a light guide plate with a reflective material discharged from a dispenser in such a state that the dispenser is in a horizontal relationship with the light guide plate, rather than a perpendicular relationship with the light guide plate with respect to the ground.

Still another aspect of the present invention also provides painting a side surface of a light guide plate while maintaining a distance between the light guide plate and the dispenser uniformly by interpolation, wherein the distance may be measured using a vision camera.

Yet another aspect of the present invention also provides paining at least one side surface of a light guide plate with a reflective material under a predetermined painting condition.

Further another aspect of the present invention also provides painting a light guide plate with a reflective material with the same painting width and height throughout a constant speed section and increasing and decreasing speed sections, by controlling a discharge rate of a dispenser based on a movement speed of the dispenser.

According to an aspect of the present invention, there is provided an apparatus for preventing a light leakage from a light guide plate, the apparatus including a sensing unit to sense at least one side surface of a light guide plate, a dispenser to discharge a reflective material to the at least one side surface of the light guide plate to prevent light generated from a back light unit from leaking from the side surface of the light guide plate, and a control unit to control the dispenser.

The reflective material may be a liquid-type.

The dispenser may discharge the reflective material while moving along the at least one side surface of the light guide plate in a longitudinal direction at a uniform distance from the light guide plate.

The dispenser may discharge the reflective material to the at least one side surface of the light guide plate with a width corresponding to 80% to 90% of a thickness of the light guide plate.

The dispenser may discharge the reflective material to the at least one side surface of the light guide plate with a height in a range of 90 micrometers (µm) and 110 µm.

The dispenser may discharge the reflective material in an angle range of -45 degrees to +45 degrees relative to the light guide plate with respect to the horizontal.

The control unit may control a discharge rate of the dispenser or a relative location of the dispenser to the light guide plate.

The control unit may control the discharge rate of the dispenser based on the movement speed of the dispenser to form a reflective material layer of a uniform thickness on the at least one side surface of the light guide plate.

The control unit may increase the discharge rate of the dispenser as the movement speed of the dispenser increases, and may reduce the discharge rate of the dispenser as the movement speed of the dispenser decreases.

The preventing apparatus may further include a measuring unit to measure a processing error present in the at least one side surface of the light guide plate or whether the light guide plate is aligned with the dispenser.

The control unit may control an amount of the reflective material to be discharged to the at least one side surface of the light guide plate based on the processing error.

The control unit may control the relative location of the dispenser to the light guide plate based on the processing error or whether the light guide plate is aligned with the dispenser.

According to another aspect of the present invention, there is provided a method of preventing a light leakage from a light guide plate, the method including sensing at least one side surface of a light guide plate, and discharging a reflective material from a dispenser to the at least one side surface of the light guide plate.

The preventing method may further include controlling a discharge rate of the dispenser or a relative location of the dispenser to the light guide plate.

The controlling of the discharge rate of the dispenser may include controlling the discharge rate of the dispenser based on a movement speed of the dispenser to form a reflective material layer of a uniform thickness on the at least one side surface of the light guide plate.

The controlling of the discharge rate of the dispenser may include increasing the discharge rate of the dispenser as the movement speed of the dispenser increases, and reducing the discharge rate of the dispenser as the movement speed of the dispenser decreases.

The preventing method may further include measuring a processing error present in the at least one side surface of the light guide plate or whether the light guide plate is aligned with the dispenser.

The controlling of the discharge rate of the dispenser may include controlling an amount of the reflective material to be discharged to the at least one side surface of the light guide plate based on the processing error.

The controlling of the discharge rate of the dispenser may include controlling the relative location of the dispenser to the light guide plate based on the processing error or whether the light guide plate is aligned with the dispenser.

According to still another aspect of the present invention, there is provided a display device including a back light unit to generate light, a light guide plate having at least one side surface painted with a reflective material to prevent the light generated from the back light unit from leaking from the light guide plate, and a display panel disposed on the light guide plate.

An amount of the reflective material to be discharged may be controlled based on a processing error for at least one side surface of the light guide plate or whether the light guide plate is aligned properly.

A width of the reflective material discharged to the at least one side surface of the light guide plate may correspond to 80% to 90% of a thickness of the light guide plate.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG. 1 is a diagram illustrating a method of attaching a reflective tape to a side surface of a light guide plate;
FIG. 2 is a block diagram illustrating an apparatus for preventing a light leakage from a light guide plate according to an exemplary embodiment;
FIG. 3 is a diagram illustrating discharge of a reflective material from a dispenser of an apparatus for preventing a light leakage from a light guide plate according to an exemplary embodiment;
FIGS. 4A through 4C are graphs illustrating a discharge rate of a dispenser and a painting width when control of the discharge rate of the dispenser by an appar atus for preventing a light leakage from a light guide plate according to an exemplary embodiment is undone;
FIGS. 5A through 5C are graphs illustrating a discharge rate of a dispenser and a painting width when the discharge rate of the dispenser is controlled by an apparatus for preventing a light leakage from a light guide plate according to an exemplary embodiment;
FIG. 6 is a diagram illustrating an apparatus for preventing a light leakage from a light guide plate viewed from the front and side according to another exemplary embodiment;
FIG. 7 is a diagram illustrating a configuration of a dispenser and a vision align unit of an apparatus for preventing a light leakage from a light guide plate according to another exemplary embodiment;
FIG. 8 is a diagram illustrating a configuration of a vision align unit of an apparatus for preventing a light leakage from a light guide plate according to another exemplary embodiment;
FIG. 9 is a flowchart illustrating a method of preventing a light leakage from a light guide plate according to an exemplary embodiment;
FIG. 10 is a flowchart illustrating a method of preventing a light leakage from a light guide plate according to another exemplary embodiment; and
FIG. 11 is a block diagram illustrating a display device having a light guide plate painted with a reflective material according to an exemplary embodiment.

### DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

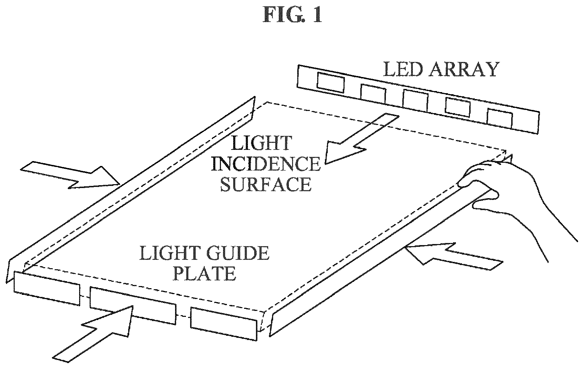

FIG. 1 is a diagram illustrating a method of attaching a reflective tape to a side surface of a light guide plate.

Referring to FIG. 1, a reflective tape may be attached to a side surface of a light guide plate by a human operator or a machine to prevent light generated from a back light unit, in particular, a light incidence surface from leaking from the side surface of the light guide plate. However, as described in the foregoing, a manual taping operation may take a great time, resulting in a reduced yield, and an automated taping operation may be inefficient due to a processing error associated with processing of the side surface of the light guide plate. Accordingly, an exemplary embodiment may automatically paint a side surface of a light guide plate with a liquid-state reflective material, for example, an reflective ink, in lieu of a reflective tape, under a predetermined condition, to reduce production costs and to improve a product quality.

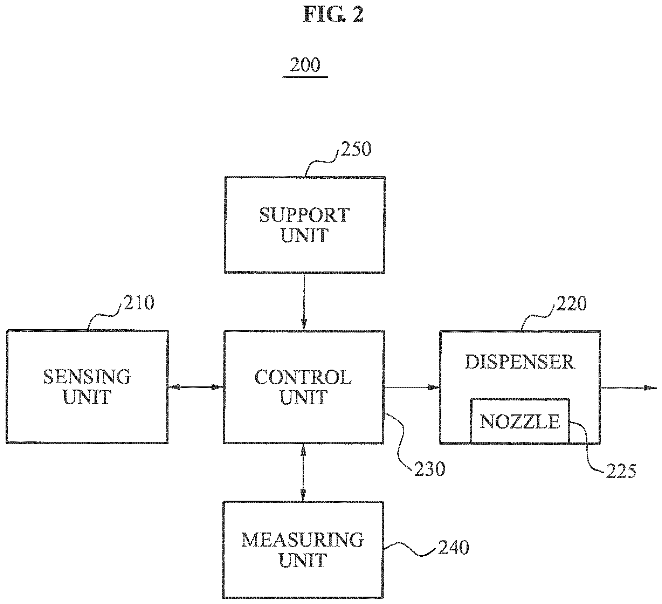

FIG. 2 is a block diagram illustrating an apparatus for preventing a light leakage from a light guide plate according to an exemplary embodiment.

Referring to FIG. 2, an apparatus 200 for preventing a light leakage from a light guide plate, hereinafter referred to as a preventing apparatus, may include a sensing unit 210, a dispenser 220, and a control unit 230. Also, the preventing apparatus 200 may further include a measuring unit 240 and a support unit 250.

The sensing unit 210 may sense at least one side surface of a light guide plate.

The dispenser 220 may discharge a reflective material to the at least one side surface of the light guide plate. Here, the reflective material ma y correspond to a liquid-state reflective ink for preventing light generated from a back light unit from leaking from the side surface of the light guide plate. The reflective material may correspond to, for example, an acryl-based liquid-state reflective material or an epoxy-based liquid-state reflective material.

The dispenser 220 may discharge the reflective material while moving along one side surface of the light guide plate in a longitudinal direction at a uniform distance from the light guide plate.

The dispenser 220 may further include a needle-type nozzle 225. In this instance, the control unit 230 may control the nozzle 225 to maintain a uniform distance from the light guide plate.

The dispenser 220 may discharge the reflective material to the at least one side surface of the light guide plate with a width corresponding to 80% to 90% of a thickness of the light guide plate and a height in a range of 90 micrometers (µm) and 110 µm. The dispenser 220 may discharge the reflective material in an angle range of -45 degrees to +45 degrees relative to the light guide plate with respect to the horizontal.

The control unit 230 may control the dispenser 220. More particularly, the control unit 230 may control a discharge rate of the dispenser 220 or a relative location of the dispenser 220 to the light guide plate.

The control unit 230 may control the discharge rate of the dispenser 220 based on a movement speed of the dispenser 220. Particularly, the control unit 230 may control the discharge rate of the dispenser 220 based on the movement speed of the dispenser 220 to form a reflective material layer of a uniform thickness on the at least one side surface of the light guide plate. The control unit 230 may change the discharge rate of the dispenser 220 linearly with a change in the movement speed of the dispenser 220. The present inventive concept is not limited in this regard, and the discharge rate of the dispenser 220 may be changed, for example, increased or decreased, by exponential, logarithmic and differential relationships and a multi-dimensional function relationship.

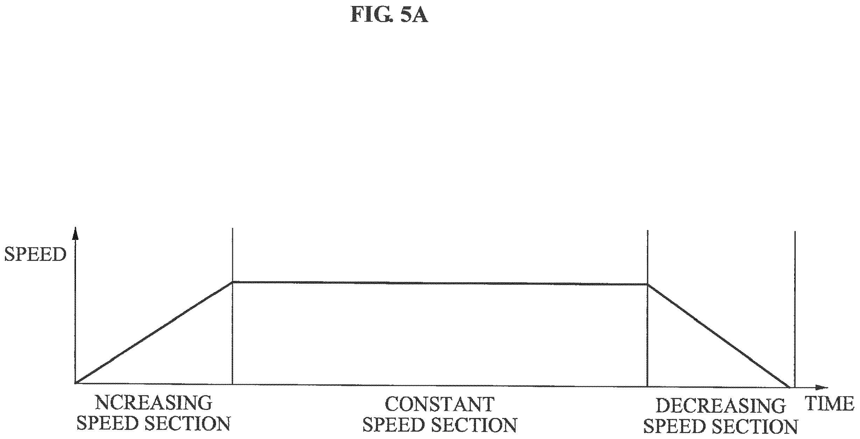

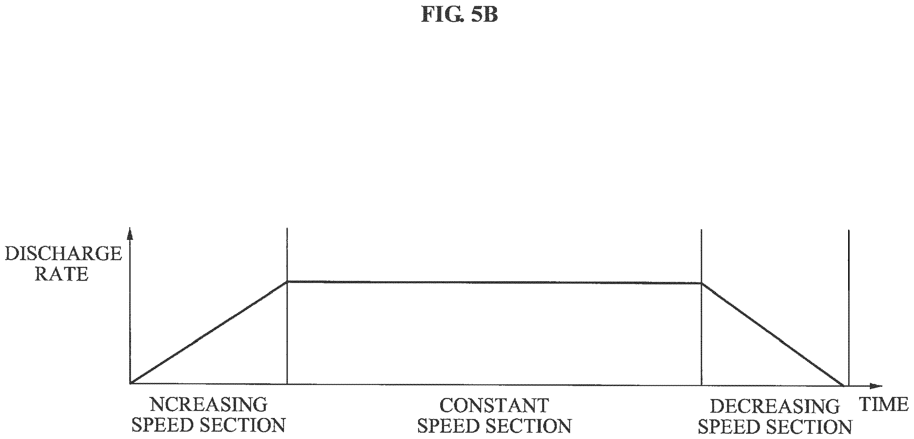

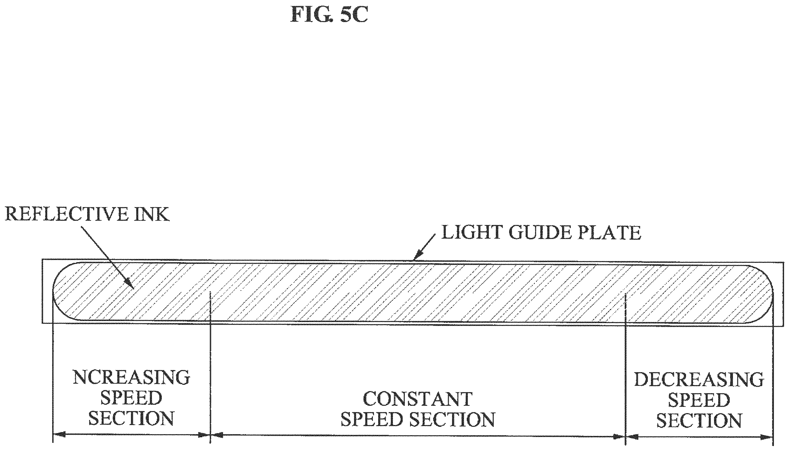

A method of controlling the discharge rate of the dispenser 220 by the control unit 230 is described in further detail with reference to FIG. 5.

The measuring unit 240 may measure a processing error present in the at least one side surface of the light guide plate or whether the light guide plate is aligned with the dispenser 220.

Accordingly, the control unit 230 may control an amount of the reflective material to be discharged to the at least one side surface of the light guide plate based on the processing error. Here, whether the light guide plate is aligned with the dispenser 220 may represent whether a location of the light guide plate is misaligned with a location of the dispenser 220. The processing error may cause a fault at a portion of the light guide plate. The control unit 230 may control the dispenser 220 to discharge an appropriate amount of the reflective material based on the presence of the fault at the corresponding portion or the location of the light guide plate misaligned with the dispenser 220.

The control unit 230 may control the relative location of the dispenser 220 to the light guide plate based on the processing error or whether the light guide plate is aligned with the dispenser 220. That is, in a case in which the relative distance between the light guide plate and the dispenser 220 changes due to the processing error or for some reasons, the control unit 230 may control the location of the dispenser 220 or the location of the light guide plate to maintain an optimal distance between the light guide plate and the dispenser 220, also referred to as an optimal painting gap.

Here, the optimal painting gap may represent an optimal distance between the light guide plate and the dispenser 220 to be maintained for painting under a predetermined painting condition, for example, a painting width and a painting height, and may correspond to a gap allowing a minimum painting thickness.

The support unit 250 may support the light guide plate to enable the dispenser 240 to discharge the reflective material in such a state that the dispenser 240 is in a horizontal relationship with the light guide plate.

Besides, the preventing apparatus 200 may further include a reservoir to receive the liquid-state reflective material, for example, a reflective ink, in use for preventing light generated from the back light unit from leaking from the at least one side surface of the light guide plate.

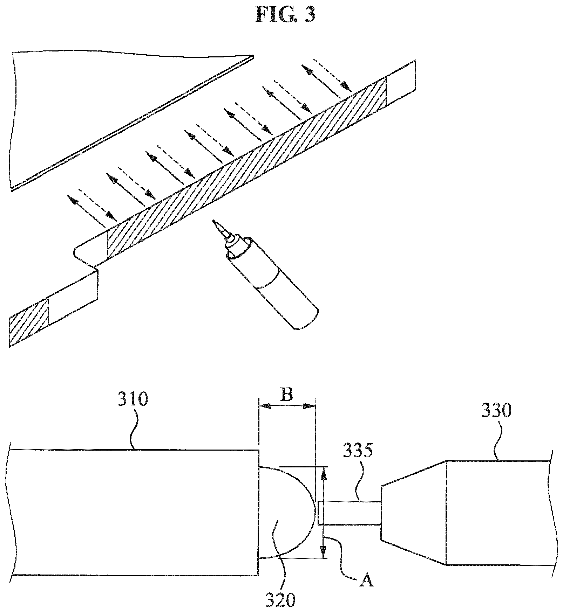

FIG. 3 is a diagram illustrating discharge of a reflective material from a dispenser of an apparatus for preventing a light leakage from a light guide plate according to an exemplary embodiment.

Referring to FIG. 3, the apparatus for preventing a light leakage from a light guide plate, hereinafter referred to as a preventing apparatus, may realize an optimum painting condition by measuring a distance between a light guide plate 310 and a dispenser 330, that is, a painting gap, and by maintaining the corresponding distance uniformly through interpolation.

Here, the painting condition may include a painting gap, a painting width A, and a painting height B.

Generally, when a painting thickness is increased, the reflective material may flow downward by a self-load. As the painting thickness is decreased to a minimum level, the flowing-down of the reflective material may be minimized by the surface tension of the reflective material. Accordingly, an exemplary embodiment may use a needle-type nozzle 335 to the dispenser 330, and may employ a mechanism of controlling the nozzle 335 to get closer to the reflective material 320 to a minimum painting gap and spreading the reflective material 320 by pressing down the reflective material 320 through direct contact. A discharge rate of the dispenser 330 may be controlled based on a processing error on at least one side surface of the light guide plate 310 or whether the light guide plate 310 is aligned with the dispenser 330, and accordingly, a reflective material layer of a uniform thickness may be formed on the at least one side surface of the light guide plate 310.

The reflective material 320 may correspond to, for example, an acryl-based liquid-state reflective material or an epoxy-based liquid-state reflective material.

Also, the preventing apparatus may discharge the reflective material 320 to the light guide plate 310 through the nozzle 335 of the dispenser 330 based on the optimum painting condition.

In this instance, the painting width A of the reflective material 320 discharged through the nozzle 335 of the dispenser 330 may correspond to 80% and 90% of a thickness of the light guide plate 310, and the painting height B may be in a range of 90 µm to 110 µm. That is, when the thickness of the light guide plate 310 is, for example, 2 millimeters (mm), the painting width of the reflective material 320 may range from 1.6 mm to 1.8 mm.

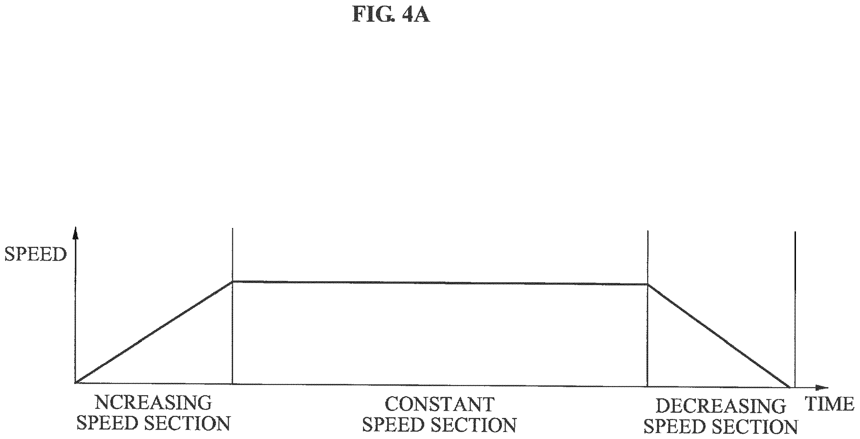

FIGS. 4A through 4C are graphs illustrating a discharge rate of a dispenser and a painting width when control of the discharge rate of the dispenser by an apparatus for preventing a light leakage from a light guide plate according to an exemplary embodiment is undone.

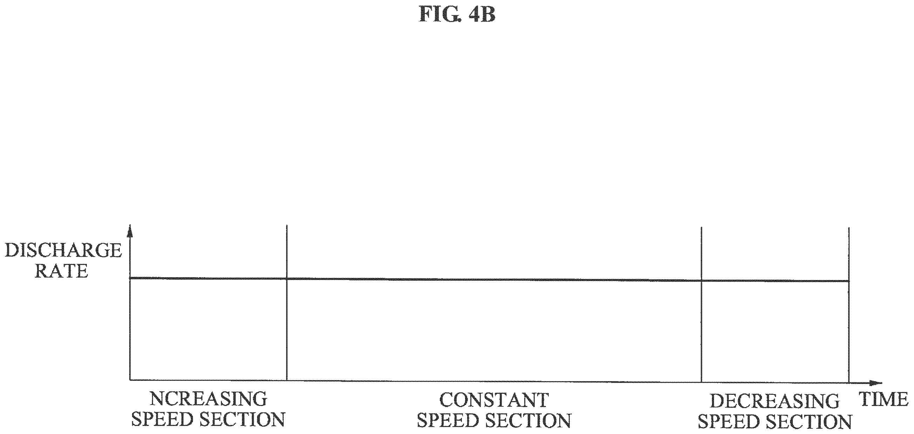

The graph of FIG. 4A illustrates a movement speed of a dispenser per unit time. As shown in the graph of FIG. 4B, a discharge rate of the dispenser per unit time may be uniform.

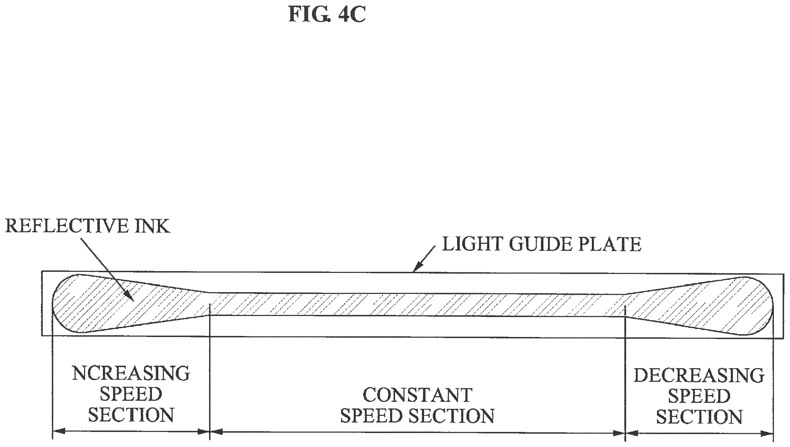

The graph of FIG. 4C illustrates, in the above case, a correlation between the discharge rate of the dispenser and a width of the reflective material applied to the light guide plate when the discharge rate of the dispenser is uncontrolled.

When the discharge rate of the dispenser is uniform as shown in FIG. 4B, a greater amount of the reflective material may be used in painting over a variable speed section in which the movement speed of the dispenser increases or decreases than a constant speed section in which the movement speed of the dispenser is constant. Here, the variable speed section may correspond to, for example, a section in which painting is conducted by the dispenser in motion or a section in which painting is executed while the light guide plate is in motion and the dispenser remains stationary. Accordingly, it may be impossible to maintain a uniform painting width throughout the entire side surface of the light guide plate as shown in FIG. 4C.

FIGS. 5A through 5C are graphs illustrating a discharge rate of a dispenser and a painting width when the discharge rate of the dispenser is controlled by an apparatus for preventing a light leakage from a light guide plate according to an exemplary embodiment.

The graph of FIG. 5A illustrates a movement speed of a dispenser per unit time. As shown in the graph of FIG. 5B, a discharge rate of the dispenser per unit time may be controlled.

The graph of FIG. 5C illustrates a correlation between the discharge rate of the dispenser and a width of the reflective material applied to the light guide plate when the discharge rate of the dispenser per unit time is controlled by the preventing apparatus based on the movement speed of the dispenser.

As described in the foregoing with reference to FIG. 4, similar to a case in which painting is conducted by the dispenser in motion or painting is conducted while the light guide plate is in motion and the dispenser remains stationary, a greater amount of the reflective material may be used in painting o ver a variable speed section in which the movement speed of the dispenser increases or decreases than a constant speed section in which the movement speed of the dispenser is constant.

Accordingly, in order to paint the reflective material with a uniform painting width and a uniform painting height throughout the entire painting area, the discharge rate of the dispenser may be controlled to discharge a relatively smaller amount of the reflective material across the variable speed section and a relative larger amount of the reflective material across the constant speed section.

That is, the control unit of the preventing apparatus may control the discharge rate of the dispenser to allow the painting with the reflective material of a uniform width and a uniform height throughout the variable speed section and the constant speed section, as shown in FIG. 5C, by increasing the discharge rate of the dispenser with an increasing movement speed of the dispenser and by reducing the discharge rate of the dispenser with a decreasing movement speed of the dispenser. In this instance, the discharge rate of the dispenser may be controlled based on a processing error on at least one side surface of the light guide plate or whether the light guide plate is aligned with the dispenser, and a reflective material layer of a uniform thickness may be formed on the at least one side surface of the light guide plate. The reflective material may correspond to, for example, an acryl-based liquid-state reflective material or an epoxy-based liquid-state reflective material.

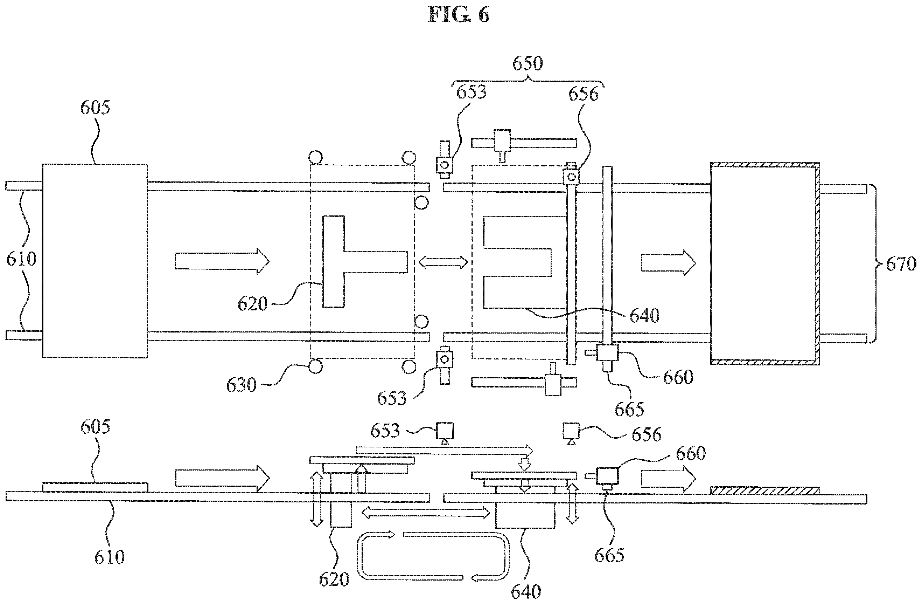

FIG. 6 is a diagram illustrating an apparatus for preventing a light leakage from a light guide plate viewed from the front and side according to another exemplary embodiment.

Referring to FIG. 6, the preventing apparatus may include a belt conveyor 610, a first moving stage 620, a pre-align unit 630, a second moving stage 640, a vision align unit 650, and a dispenser 660.

The belt conveyor 610 may transfer a light guide plate 605 by a driving source carrying out synchronized control, for example, a servo motor. The belt conveyor 610 may consist of two conveyor belts, rather than a flat belt, to accommodate a stage unit used to move the light guide plate 605. The two conveyor belts may be controlled by each servo motor in a synchronized manner.

The belt conveyor 610 may adjust a width between the two conveyor belts automatically through an LM guide, a ball screw, and a servo motor, to enable the transfer of light guide plates of various sizes.

The first moving stage 620 may move vertically, and may move up the transferred light guide plate 605. The first moving stage 620 may further include a vacuum plate having a capacity to adsorb the light guide plate 605 to prevent misalignment during transferring the light guide plate 605. The first moving stage 620 may move the light guide plate 605 in an adsorbed state by the vacuum plate.

The first moving stage 620 may enable the transfer of light guide plates of various sizes by replacing with a vacuum plate of a corresponding size by a light guide plate model change (M/C) among a plurality of vacuum plates of various suitable sizes prepared for each size group of the light guide plate. A driving source for the first moving stage 620 may be controlled by a servo motor.

The pre-align unit 630 may align the light guide plate 605 seated on the first moving stage 620 to a first location.

The second moving stage 640 may move along an X-axis and a Z-axis, that is, horizontally and vertically, and may move the light guide plate 605 aligned to the first location to a painting area. Similar to the first moving stage 620, the second moving stage 640 may enable the transfer of light guide plates of various sizes by replacing with a vacuum plate of a corresponding size by a light guide plate model change (M/C) among a plurality of vacuum plates of various suitable sizes prepared for each size group of the light guide plate. A driving source for the second moving stage 640 may be controlled by a servo motor.

The vision align unit 650 may measure a processing error for each of at least one side surface of the light guide plate 605 and whether the light guide plate 605 is aligned with the dispenser 660, by conducting a line scan of the light guide plate 605 being transferred to the painting area.

The vision align unit 650 may measure the processing error for each of the at least one side surface of the light guide plate 605 and whether the light guide plate 605 is aligned with the dispenser 660 by conducting a line scan using a vision camera moving horizontally based on a size of the light guide plate 605 transferred to the painting area.

The vision align unit 650 may include a first vision align unit 653 and a second vision align unit 656, and the first vision align unit 653 and the second vision align unit 656 may correspond to, for example, a vision camera.

The first vision align unit 653 may measure a processing error for each of a second surface and a third surface of the light guide plate 605 and whether the light guide plate 605 is aligned with the dispenser 660, by conducting a line scan of the second surface and the third surface of the light guide plate 605 being transferred to the painting area.

The first vision align unit 653 may be fixed above the light guide plate 605, and may measure whether the light guide plate 605 is aligned with the dispenser 660 by conducting a line scan of the second surface and the third surface of the light guide plate 605 while the light guide plate 605 is being transferred by the second moving stage 640 to the painting area in an adsorbed state.

To measure light guide plates of various sizes, in a case in which one vision camera is used, a vision camera having a large field of view (F.O.V) may be adopted, but it may cause increased costs. Accordingly, an exemplary embodiment may use a vision camera having a small field of view, and may measure whether a light guide plate is aligned properly using a vision camera moving along a Y-axis, that is, horizontally based on a size of the light guide plate. An operation of moving the vision camera may be controlled by a servo motor.

The second vision align unit 656 may measure a processing error on a first surface of the light guide plate 605 and whether the light guide plate 605 is aligned with the dispenser 660 by conducting a line scan of the first surface of the light guide plate 605 transferred to the painting area.

The dispenser 660 may paint at least one side surface of the light guide plate 605 with the reflective material under a preset painting condition, based on the processing error and whether the light guide plate 605 is aligned with the dispenser 660.

When alignment of the light guide plate 605 by the vision align unit 650 is completed, the dispenser 660 may paint each side surface concurrently based on the size of the corresponding light guide plate 605 and the painting condition.

The dispenser 660 may further include a robot 665 to perform vertical and horizontal interpolation based on the processing error for each of the at least one side surface of the light guide plate 605 and whether the light guide plate 605 is aligned with the dispenser 660. The robot 665 may perform X- and Y-axis interpolation based on a data value measured by the vision align unit 650, and may enable the painting while maintaining a predetermined distance between the light guide plate 605 and the dispenser 660, that is, a painting interval.

When the painting is completed, the second moving stage 640 may move down to dispose the light guide plate 605 on the belt conveyor 670, and may move to an area of the first moving stage 640 where the second moving stage 640 may stand by for a next operation. Then, the belt conveyor 670 may transfer the light guide plate 605 to a hardener for a next process. The belt conveyor 670 may have the same configuration and function as the belt conveyor 610.

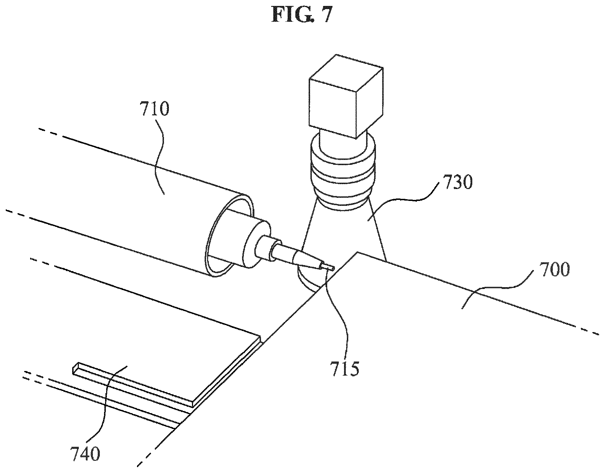

FIG. 7 is a diagram illustrating a configuration of a dispenser and a vision align unit of an apparatus for preventing a light leakage from a light guide plate according to another exemplary embodiment.

Referring to FIG. 7, when a light guide plate 700 is transferred to a painting area by a second moving stage 740, a vision align unit 730 may measure a processing error for each of at least one side surface of the light guide plate 700 and whether the light guide plate 700 is aligned with a dispenser 710. The dispenser 710 may paint the at least one side surface of the light guide plate 700 under controlled conditions based on data measured by the vision align unit 730, for example, an amount of a reflective material to be discharged through a nozzle 715, a painting interval, and a painting width.

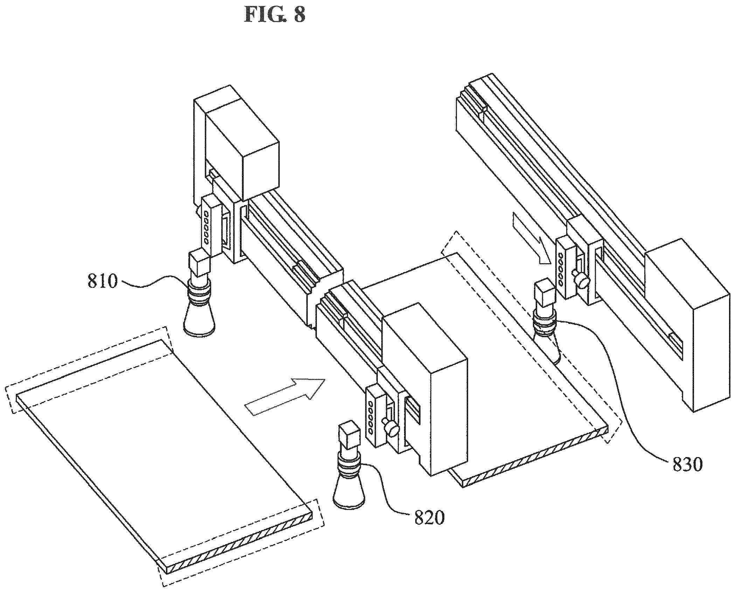

FIG. 8 is a diagram illustrating a configuration of a vision align unit of an apparatus for preventing a light leakage from a light guide plate according to another exemplary embodiment.

Referring to FIG. 8, a first vision align unit 810 and 820 may be fixed above a light guide plate, and the light guide plate may be moved to a painting area. Then, the fixed first vision align unit 810 and 820 may measure a processing error for each of at least one side surface of the light guide plate, for example, a second surface and a third surface and whether the light guide plate is aligned with the dispenser, by conducting a line scan of the second surface and the third surface of the light guide plate.

When transfer of the light guide plate is completed, a second vision align unit 830 may conduct a line scan of at least one remaining side surface of the light guide plate while moving directly above the light guide plate.

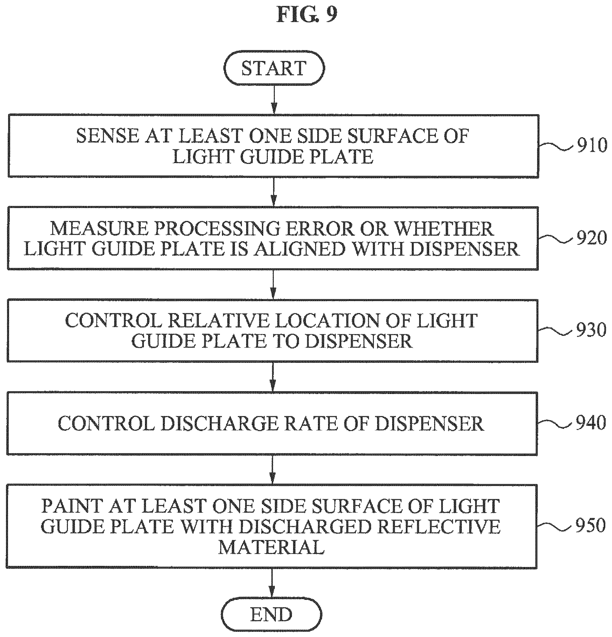

FIG. 9 is a flowchart illustrating a method of preventing a light leakage from a light guide plate according to an exemplary embodiment.

Referring to FIG. 9, in operation 910, an apparatus for preventing a light leakage from a light guide plate, hereinafter referred to as a preventing apparatus, may sense at least one side surface of the light guide plate.

In operation 920, the preventing apparatus may measure a processing error present in the at least one side surface of the light guide plate or whether the light guide plate is aligned with a dispenser.

In operation 930, the preventing apparatus may control a relative location of the dispenser to the light guide plate based on a result of the measurement in 920.

In operation 940, the preventing apparatus may control a discharge rate of the dispenser, in turn, an amount of a reflective material to be discharged from the dispenser to the at least one side surface of the light guide plate. The preventing apparatus may discharge the reflective material from the dispenser to the at least one side surface of the light guide plate. The preventing apparatus may control the discharge rate of the dispenser based on a movement speed of the dispenser, to form a reflective material layer of a uniform thickness on the at least one side surface of the light guide plate. In this instance, the preventing apparatus may control the discharge rate of the dispenser, that is, the amount of the reflective material for the at least one side surface of the light guide plate, based on the processing error.

Also, the preventing apparatus may control the relative location of the dispenser to the light guide plate based on the processing error or whether the light guide plate is aligned with the dispenser.

The preventing apparatus may, in operation 940, control the discharge rate of the dispenser based on the movement speed of the dispenser. In this instance, the preventing apparatus may change the discharge rate of the dispenser linearly with a change in the movement speed of the dispenser. More particularly, the preventing apparatus may increase the discharge rate of the dispenser with an increasing movement speed of the dispenser, and may reduce the discharge rate of the dispenser with a decreasing movement speed of the dispenser. Through this, the preventing apparatus according to an exemplary embodiment may allow the painting with the reflective material of a uniform painting width and a uniform painting height over the entire painting area. In addition, the preventing apparatus may change the discharge rate of the dispenser with the change in the movement speed of the dispenser, for example, by exponential, logarithmic and differential relationships and a multi-dimensional function relationship.

Also, the preventing apparatus may support the light guide plate to enable the dispenser to discharge the reflective material in such a state that the dispenser is in a horizontal relationship with the light guide plate. In a case in which the light guide plate is perpendicular to the ground, more space may be needed to manufacture an equipment and complexity in equipment configuration may increase. Accordingly, an exemplary embodiment may support the dispenser and the light guide plate on a horizontal level to enable discharging and painting of the reflective material in such a state that the dispenser is in a horizontal relationship with the light guide plate.

In operation 950, the preventing apparatus may paint the at least one side surface of the light guide plate with the reflective material based on the discharge rate of the dispenser.

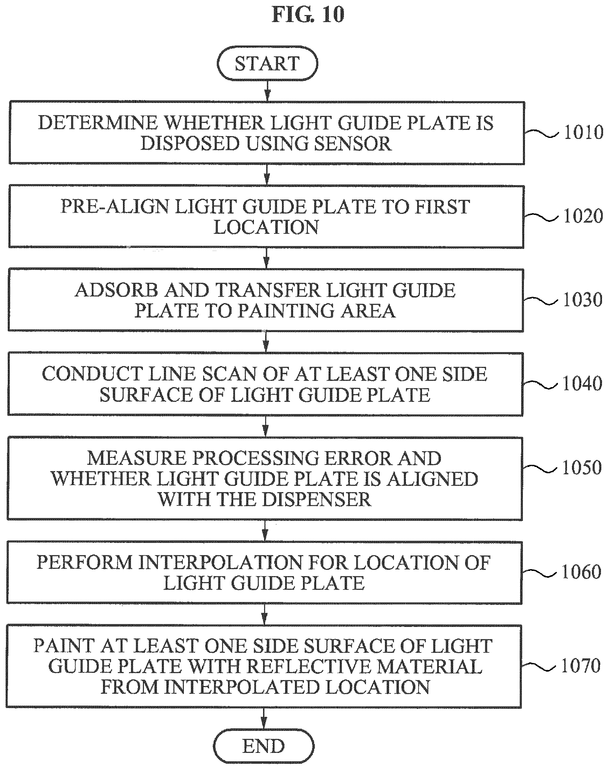

FIG. 10 is a flowchart illustrating a method of preventing a light leakage from a light guide plate according to another exemplary embodiment.

Referring to FIG. 10, an apparatus for preventing a light leakage from a light guide plate, hereinafter referred to as a preventing apparatus, may transfer a light guide plate to a location of a first moving stage through a belt conveyor when the light guide plate is put in.

In operation 1010, the preventing apparatus may determine whether the light guide plate is disposed at the location of the first moving stage using a sensor.

In operation 1020, when the light guide plate is determined to be disposed at the location of the first moving stage, the preventing apparatus may pre-align the light guide plate to a first location by moving up the light guide plate transferred to the first moving stage by the belt conveyor. The preventing apparatus may align the light guide plate to the first location by moving up the light guide plate disposed on the first moving stage in an absorbed state based on a result of the measurement in operation 1010.

In operation 1030, the preventing apparatus may adsorb to transfer the light guide plate aligned to the first location to a painting area. In this instance, a second moving stage may move up and may adsorb the light guide plate disposed on the first moving stage by vacuum whereas the first moving stage may release the vacuum and may move down.

In operation 1040, the preventing apparatus may conduct a line scan for each of at least one side surface of the light guide plate using a plurality of vision cameras. The preventing apparatus may, in operation 1040, conduct a line scan by a vision camera moving horizontally based on a size of the light guide plate transferred to the painting area.

More particularly, while the light guide plate is being transferred to the painting area by the second moving stage, the preventing apparatus may conduct a line scan of at least one side surface of the light guide plate, for example, a second surface and a third surface, using at least two first vision cameras fixed above the light guide plate. Subsequently, when transfer to the painting area is completed, the preventing apparatus may conduct a line scan of a remaining side surface of the light guide plate, for example, a first surface, using a second vision camera.

In operation 1050, the preventing apparatus may measure a processing error for each of the at least one side surface of the light guide plate and whether the light guide plate is aligned with the dispenser, based on a result of the scan.

Here, whether the light guide plate is aligned with the dispenser may represent how much a location of the light guide plate is misaligned with a location of the dispenser.

In operation 1060, the preventing apparatus may perform interpolation for the location of the light guide plate based on the processing error for each of the at least one side surface of the light guide plate and whether the light guide plate is aligned with the dispenser. Here, the preventing apparatus may uniformly maintain a distance between the light guide plate and a tip of a nozzle of the dispenser, that is, a painting interval by controlling a robot of the dispenser using the processing error for each of the at least one side surface of the light guide plate and a measurement value for misalignment of the light guide plate from the dispenser.

In operation 1070, the preventing apparatus may paint the at least one side surface of the light guide plate with the reflective material under a preset painting condition with respect to the interpolated location based on the processing error or whether the light guide plate is aligned with the dispenser. The preventing apparatus may paint the at least one side surface of the light guide plate with the reflective material while maintaining a predetermined distance from the light guide plate with respect to the interpolated location.

After the painting of the light guide plate is completed, the preventing apparatus may release the vacuum applied by the second moving stage and may put down the light guide plate on the belt conveyor. Then, the belt conveyor may transfer the light guide plate to a drying furnace for a next process, during which the second moving stage may move to a location of the first moving stage to adsorb a new light guide plate.

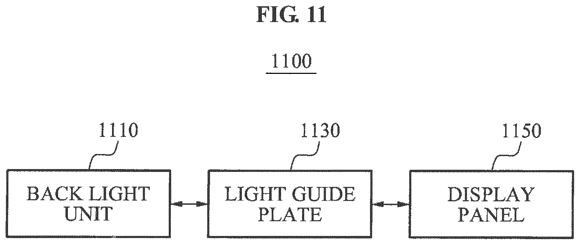

FIG. 11 is a block diagram illustrating a display device having a light guide plate painted with a reflective material according to an exemplary embodiment.

Referring to FIG. 11, the display device 1100 may include a back light unit 1110, a light guide plate 1130, and a display panel 1150.

The back light unit 1110 may generate light.

The light guide plate 1130 may have at least one side surface, and to prevent the light generated from the back light unit 1110 from leaking from the light guide plate 1130, the at least one side surface of the light guide plate 1130 may be painted with a reflective material.

In this instance, the at least one side surface of the light guide plate 1130 may be painted with a controlled amount of the reflective material discharged based on a processing error for the at least one side surface of the light guide plate 1130 or whether the light guide plate 1130 is aligned properly. Here, a width of the reflective material discharged to the at least one side surface of the light guide plate 1130 may correspond to 80% to 90% of a thickness of the light guide plate 1130. The reflective material may correspond to, for example, acryl-based liquid-state reflective material or an epoxy-based liquid-state reflective material.

The display panel 1150 may be disposed on the light guide plate 1130.

The above-described exemplary embodiments of the present invention may be recorded in computer-readable media including program instructions to implement various operations embodied by a computer. The media may also include, alone or in combination with the program instructions, data files, data structures, and the like. Examples of computer-readable media include magnetic media such as hard discs, floppy discs, and magnetic tape; optical media such as CD ROM discs and DVDs; magneto-optical media such as floptical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention, or vice versa.

According to an exemplary embodiment, a reflective ink of a lower price than a reflective tape may be used in preventing light emitted from a cold cathode fluorescent lamp (CCFL) or a light emitting diode (LED) from leaking from a side surface of a light guide plate, to reduce production costs.

According to an exemplary embodiment, a side surface of a light guide plate may be painted with a reflective material discharged from a dispenser in such a state that the dispenser is in a horizontal relationship with the light guide plate with respect to the ground, to optimize an equipment configuration and an installation space and to minimize equipment investment costs, compared to a case in which the dispenser is in a vertical relationship with the light guide plate.

According to an exemplary embodiment, an optimum painting condition, for example, a painting width and a painting height, may be realized by measuring a distance between a light guide plate and a dispenser using a vision camera and by maintaining the corresponding distance uniformly by interpolation, to improve a product quality.

According to an exemplary embodiment, a discharge rate of a dispenser may be controlled in real time based on a movement speed of the dispenser to paint a light guide plate with a reflective material with the same painting width and height throughout a constant speed section and a variable speed section in which the movement speed of the dispenser increases or decreases per unit time, resulting in improved product quality.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. An apparatus for preventing a light leakage from a light guide plate (310; 605; 700; 1130), the apparatus (200) being **characterized by** comprising:
a sensing unit (210) to sense at least one side surface of a light guide plate;
a dispenser (220; 330; 710) to discharge a reflective liquid material (320) to the at least one side surface of the light guide plate to prevent light generated from a back light unit (1110) from leaking from the side surface of the light guide plate;
a measuring unit (240) to measure a processing error present in the at least one side surface of the light guide plate or whether the light guide plate is aligned with the dispenser; and
a control unit (230) to control the dispenser based on said measuring, said controlling including controlling an amount of the reflective liquid material to be discharged to the at least one side surface of the light guide plate, or controlling the relative location of the dispenser to the light guide plate.

2. The apparatus of claim 1, wherein the dispenser (220; 330; 710) is arranged to discharge the reflective liquid material (320) while moving along the at least one side surface of the light guide plate (310; 605; 700; 1130) in a longitudinal direction at a uniform distance from the light guide plate.

3. The apparatus of claim 1 or claim 2, wherein the dispenser (220; 330; 710) is arranged to discharge the reflective liquid material (320) to the at least one side surface of the light guide plate (310; 605; 700; 1130) with a width (A) corresponding to 80% to 90% of a thickness of the light guide plate.

4. The apparatus of claim 1, wherein the dispenser (220; 330; 710) is arranged to discharge the reflective liquid material (320) to the at least one side surface of the light guide plate (310; 605; 700; 1130) with a layer thickness (B) of the discharged reflective liquid material in a range of 90 micrometers (µm) to 110 µm.

5. The apparatus of claim 1, wherein the dispenser (220; 330; 710) is arranged to discharge the reflective liquid material (320) in an angle range of -45 degrees to +45 degrees relative to the light guide plate (310; 605; 700; 1130) with respect to the horizontal.

6. The apparatus of claim 1, wherein the control unit is arranged to control the discharge rate of the dispenser (220; 330; 710) based on the movement speed of the dispenser to form a reflective material layer of a uniform thickness (B) on the at least one side surface of the light guide plate (310; 605; 700; 1130).

7. The apparatus of claim 6, wherein the control unit (230) is arranged to increase the discharge rate of the dispenser (220; 330; 710) as the movement speed of the dispenser increases, and is arranged to reduce the discharge rate of the dispenser as the movement speed of the dispenser decreases.

8. A method of preventing a light leakage from a light guide plate (310; 605; 700; 1130), the method being **characterized by** comprising the automatically performed steps of:
sensing at least one side surface of a light guide plate (310; 605; 700; 1130);
measuring a processing error present in the at least one side surface of the light guide plate or whether the light guide plate is aligned with a dispenser (220; 330; 710); and
discharging a reflective liquid material (320) from the dispenser to the at least one side surface of the light guide plate;
wherein, during said discharging and based on said measuring, an amount of the reflective liquid material to be discharged to the at least one side surface of the light guide plate is controlled, or the relative location of the dispenser to the light guide plate is controlled.

9. A light guide plate, **characterized by** having at least one side surface automatically painted by a method according to claim 8, with a discharged reflective liquid material (320) to prevent the light generated from a back light unit (1110) from leaking from the light guide plate (310; 605; 700; 1130).

10. The light guide plate of claim 9, wherein a width (A) of the reflective liquid material (320) discharged to the at least one side surface of the light guide plate (310; 605; 700; 1130) corresponds to 80% to 90% of a thickness of the light guide plate.

11. The light guide plate of claim 9 or claim 10, wherein the light guide plate (310; 605; 700; 1130) is part of a display device (1100), which display device further comprises a back light unit (1110) to generate light, and a display panel (1150) disposed on the light guide plate.

## Patentansprüche

1. Vorrichtung zur Verhinderung von Lichtverlust aus einer Lichtleiterplatte (310; 605; 700; 1130), die Vorrichtung (200) **dadurch gekennzeichnet, dass** sie Folgendes umfasst:
eine Abtasteinheit (210) zum Abtasten von mindestens einer Seitenoberfläche einer Lichtleiterplatte;
einen Geber (220; 330; 710) zum Abgeben eines reflektierenden flüssigen Materials (320) an die mindestens eine Seitenoberfläche der Lichtleiterplatte, um zu verhindern, dass Licht, erzeugt von einer Rücklichteinheit (1110) aus der Seitenoberfläche der Lichtleiterplatte austritt;
eine Messeinheit (240) zum Messen eines Verarbeitungsfehlers, vorhanden in der mindestens einen Seitenoberfläche der Lichtleiterplatte, oder ob die Lichtleiterplatte auf den Geber ausgerichtet ist;
und
eine Steuerungseinheit (230) zum Steuern des Gebers auf der Basis der Messung, die Steuerung umfassend das Steuern einer Menge des reflektierenden flüssigen Materials, abzugeben an die mindestens eine Seitenoberfläche der Lichtleiterplatte, oder Steuern des relativen Standorts des Gebers zu der Lichtleiterplatte.

2. Vorrichtung nach Anspruch 1, wobei der Geber (220; 330; 710) angeordnet ist zum Abgeben des reflektierenden flüssigen Materials (320) während des Bewegens entlang der mindestens einen Seitenoberfläche der Lichtleiterplatte (310; 605; 700; 1130) in einer Längsrichtung in einem gleichmäßigen Abstand von der Lichtleiterplatte.

3. Vorrichtung nach Anspruch 1 oder 2, wobei der Geber (220; 330; 710) angeordnet ist zum Abgeben des reflektierenden flüssigen Materials (320) an die mindestens eine Seitenoberfläche der Lichtleiterplatte (310; 605; 700; 1130) mit einer Breite (A) entsprechend 80 % bis 90 % einer Dicke der Lichtleiterplatte.

4. Vorrichtung nach Anspruch 1, wobei der Geber (220; 330; 710) angeordnet ist zum Abgeben des reflektierenden flüssigen Materials (320) an die mindestens eine Seitenoberfläche der Lichtleiterplatte (310; 605; 700; 1130) mit einer Lagendicke (B) des abgegebenen reflektierenden flüssigen Materials in einem Bereich von 90 Mikrometern (µm) bis 110 µm.

5. Vorrichtung nach Anspruch 1, wobei der Geber (220; 330; 710) angeordnet ist zum Abgeben des reflektierenden flüssigen Materials (320) in einem Winkelbereich von -45 Grad bis +45 Grad relativ zu der Lichtleiterplatte (310; 605; 700; 1130) in Bezug auf die Horizontale.

6. Vorrichtung nach Anspruch 1, wobei die Steuerungseinheit angeordnet ist zum Steuern der Abgaberate des Gebers (220; 330; 710) auf der Basis der Bewegungsgeschwindigkeit des Gebers, um eine reflektierende Materiallage von einer gleichmäßigen Dicke (B) auf der mindestens einen Seitenoberfläche der Lichtleiterplatte (310; 605;700; 1130) zu bilden.

7. Vorrichtung nach Anspruch 6, wobei die Steuerungseinheit (230) angeordnet ist zum Erhöhen der Abgaberate des Gebers (220; 330; 710) mit zunehmender Bewegungsgeschwindigkeit des Gebers und angeordnet ist zum Vermindern der Abgaberate des Gebers mit abnehmender Bewegungsgeschwindigkeit des Gebers.

8. Verfahren zum Verhindern von Lichtverlust aus einer Lichtleiterplatte (310; 605; 700; 1130), das Verfahren **dadurch gekennzeichnet, dass** es folgende automatisch ausgeführte Schritte umfasst:
Abtasten an mindestens einer Seitenoberfläche einer Lichtleiterplatte (310; 605; 700; 1130);
Messen eines Verarbeitungsfehlers in der mindestens einen Seitenoberfläche der Lichtleiterplatte oder ob die Lichtleiterplatte auf einen Geber (220; 330; 710) ausgerichtet ist; und
Abgeben eines reflektierenden flüssigen Materials (320) von dem Geber an die mindestens eine Seitenoberfläche der Lichtleiterplatte;
wobei, während des Abgebens und auf der Basis der Messung, einer Menge des reflektierenden flüssigen Materials, abzugeben an die mindestens eine Seitenoberfläche der Lichtleiterplatte gesteuert wird oder der relative Standort des Gebers zu der Lichtleiterplatte gesteuert wird.

9. Lichtleiterplatte, **dadurch gekennzeichnet, dass** sie mindestens eine Seitenoberfläche aufweist, die automatisch durch ein Verfahren nach Anspruch 8 mit einem abgegebenen flüssigen Material (320) angemalt ist, um zu verhindern, dass Licht, erzeugt von einer Rücklichteinheit (1110) aus der Lichtleiterplatte (310; 605; 700; 1130) austritt.

10. Lichtleiterplatte nach Anspruch 9, wobei eine Breite (A) des reflektierenden flüssigen Materials (320), abgegeben an die mindestens eine Seitenoberfläche der Lichtleiterplatte (310; 605; 700; 1130), 80 % bis 90 % einer Dicke der Lichtleiterplatte entspricht.

11. Lichtleiterplatte nach Anspruch 9 oder Anspruch 10, wobei die Lichtleiterplatte (310; 605; 700; 1130) Teil einer Anzeigevorrichtung (1100) ist, welche Anzeigevorrichtung ferner eine Rücklichteinheit (1110) zum Erzeugen von Licht und eine auf der Lichtleiterplatte angeordnete Anzeigetafel (1150) umfasst.

## Revendications

1. Appareil pour empêcher une fuite de lumière depuis une plaque guide lumière (310 ; 605 ; 700 ; 1130), l'appareil (200) étant **caractérisé en ce qu'**il comprend :
une unité de détection (210) pour détecter au moins une surface de côté d'une plaque guide lumière ;
un distributeur (220 ; 330 ; 710) pour déposer un matériau liquide réfléchissant (320) sur l'au moins une surface de côté de la plaque guide lumière pour empêcher une lumière générée depuis une unité de rétroéclairage (1110) de fuir depuis la surface de côté de la plaque guide lumière ;
une unité de mesure (240) pour mesurer une erreur de traitement présente dans l'au moins une surface de côté de la plaque guide lumière ou pour mesurer si la plaque guide lumière est alignée avec le distributeur ; et
une unité de commande (230) pour commander le distributeur d'après ladite mesure, ladite commande comportant la commande d'une quantité du matériau liquide réfléchissant à déposer sur l'au moins une surface de côté de la plaque guide lumière, ou la commande de l'emplacement relatif du distributeur par rapport à la plaque guide lumière.

2. Appareil selon la revendication 1, dans lequel le distributeur (220 ; 330 ; 710) est agencé pour déposer le matériau liquide réfléchissant (320) tout en se déplaçant le long de l'au moins une surface de côté de la plaque guide lumière (310 ; 605 ; 700 ; 1130) dans une direction longitudinale à une distance uniforme de la plaque guide lumière.

3. Appareil selon la revendication 1 ou la revendication 2, dans lequel le distributeur (220 ; 330 ; 710) est agencé pour déposer le matériau liquide réfléchissant (320) sur l'au moins une surface de côté de la plaque guide lumière (310 ; 605 ; 700 ; 1130) avec une largeur (A) correspondant à 80 % à 90 % d'une épaisseur de la plaque guide lumière.

4. Appareil selon la revendication 1, dans lequel le distributeur (220 ; 330 ; 710) est agencé pour déposer le matériau liquide réfléchissant (320) sur l'au moins une surface de côté de la plaque guide lumière (310 ; 605 ; 700 ; 1130) avec une épaisseur de couche (B) du matériau liquide réfléchissant déposé dans une plage de 90 micromètres (µm) à 110 µm.

5. Appareil selon la revendication 1, dans lequel le distributeur (220 ; 330 ; 710) est agencé pour déposer le matériau liquide réfléchissant (320) dans une plage angulaire de -45 degrés à +45 degrés relativement à la plaque guide lumière (310 ; 605 ; 700 ; 1130) par rapport à l'horizontale.

6. Appareil selon la revendication 1, dans lequel l'unité de commande est agencée pour commander le taux de dépôt du distributeur (220 ; 330 ; 710) d'après la vitesse de déplacement du distributeur pour former une couche de matériau réfléchissant d'une épaisseur uniforme (B) sur l'au moins une surface de côté de la plaque guide lumière (310 ; 605 ; 700 ; 1130).

7. Appareil selon la revendication 6, dans lequel l'unité de commande (230) est agencée pour augmenter le taux de dépôt du distributeur (220 ; 330 ; 710) lorsque la vitesse de déplacement du distributeur augmente, et est agencée pour réduire le taux de dépôt du distributeur lorsque la vitesse de déplacement du distributeur diminue.

8. Méthode pour empêcher une fuite de lumière depuis une plaque guide lumière (310 ; 605 ; 700 ; 1130), la méthode étant **caractérisée en ce qu'**elle comprend les étapes réalisées automatiquement de :
détection d'au moins une surface de côté d'une plaque guide lumière (310 ; 605 ; 700 ; 1130) ;
mesure d'une erreur de traitement présente dans l'au moins une surface de côté de la plaque guide lumière ou mesure de si la plaque guide lumière est alignée avec un distributeur (220 ; 330 ; 710) ; et
dépôt d'un matériau liquide réfléchissant (320) depuis le distributeur vers l'au moins une surface de côté de la plaque guide lumière ;
dans laquelle, pendant ledit dépôt et d'après ladite mesure, une quantité du matériau liquide réfléchissant à déposer sur l'au moins une surface de côté de la plaque guide lumière est commandée, ou l'emplacement relatif du distributeur par rapport à la plaque guide lumière est commandé.

9. Plaque guide lumière, **caractérisée en ce qu'**elle a au moins une surface de côté peinte automatiquement par une méthode selon la revendication 8, avec un matériau liquide réfléchissant déposé (320) pour empêcher la lumière générée depuis une unité de rétroéclairage (1110) de fuir depuis la plaque guide lumière (310 ; 605 ; 700 ; 1130).

10. Plaque guide lumière selon la revendication 9, dans laquelle une largeur (A) du matériau liquide réfléchissant (320) déposé sur l'au moins une surface de côté de la plaque guide lumière (310 ; 605 ; 700 ; 1130) correspond à 80 % à 90 % d'une épaisseur de la plaque guide lumière.

11. Plaque guide lumière selon la revendication 9 ou la revendication 10, dans laquelle la plaque guide lumière (310 ; 605 ; 700 ; 1130) fait partie d'un dispositif d'affichage (1110), lequel dispositif d'affichage comprend en outre une unité de rétroéclairage (1110) pour générer une lumière, et un panneau d'affichage (1150) disposé sur la plaque guide lumière.
